Europäisches Patentamt

European Patent Office

Office européen des brevets

(19)

(11) Numéro de publication: **0 332 603**
**A2**

(12) # DEMANDE DE BREVET EUROPEEN

(21) Numéro de dépôt: **89870038.0**

(22) Date de dépôt: **09.03.89**

(51) Int. Cl.⁴: $H\ 04\ N\ 5/72$

(30) Priorité: **11.03.88 BE 8800281**

(43) Date de publication de la demande:
**13.09.89 Bulletin 89/37**

(84) Etats contractants désignés:
**AT BE CH DE ES FR GB IT LI NL**

(71) Demandeur: **Prade, Pierre-Louis**
**Rue de Chièvres 102**
**B-7420 Baudour (BE)**

(72) Inventeur: **Prade, Pierre-Louis**
**Rue de Chièvres 102**
**B-7420 Baudour (BE)**

(74) Mandataire: **Vanderperre, Robert et al**
**Bureau VANDER HAEGHEN 63 Avenue de la Toison d'Or**
**B-1060 Bruxelles (BE)**

(54) **Dispositif de visualisation sélectif et appareil électronique l'incorporant.**

(57) Une lucrane de visualisation directionnelle comportant un dispositif grossissant ou déformant (7) s'étend le long d'un côté au moins d'une surface de visualisation (10) dans un plan général oblique par rapport à celui de ladite surface de visualisation de manière à rendre des information sélectionnées visibles dans une direction privilégiée. La lucarne de visualisation directionnelle peut être agencée de manière à rendre visibles les information affichées dans une zone prédéterminée de la surface de visualisation (10) ou affichées sur une surface de visualisation ou d'un affichage auxiliaire. Le dispositif grossissant ou déformant (7) est avantageusement formée avec des éléments en saillie concentriques (71) sur une face.

FIG.1

EP 0 332 603 A2

Description

## DISPOSITIF DE VISUALISATION SELECTIF ET APPAREIL ELECTRONIQUE L'INCORPORANT

La présente invention concerne un dispositif de visualisation perfectionné pour présenter des informations de manière sélective sur des appareils divers, notamment des appareils électroniques d'amusement ou de jeux sportifs, des machines de traitement de textes, par exemple.

Un premier but de l'invention est de réaliser un affichage sélectif afin de présenter une zone de visualisation distincte dans laquelle des informations particulières peuvent être vues par l'usager uniquement et non point par un observateur se trouvant à côté de lui ou à proximité. Or, on peut envisager d'afficher sur un appareil placé dans un endroit public des informations que l'usager peut préférer être seul à voir ou à pouvoir saisir, par exemple des résultats de pronostic ou de tiercé, des données de fichiers, des catalogues, des cotes boursières pour citer quelques exemples typiques.

Ce but est atteint selon l'invention grâce à un dispositif de visualisation caractérisé par une lucarne de visualisation directionnelle comportant un dispositif grossissant ou déformant s'étendant le long d'un côté au moins de la surface de visualisation dans un plan général oblique par rapport à celui de la surface de visualisation de manière à rendre des informations sélectionnées visibles dans une direction privilégiée.

Dans un mode d'exécution exemplaire, le dispositif grossissant ou déformant est constitué d'une feuille optique de matière transparente ayant une face formée avec des éléments en saillie concentriques dont le centre de courbure est situé vers le centre de la surface de visualisation.

Grâce à l'invention, il est possible d'afficher dans ladite lucarne des informations particulières pour lesquelles l'usager peut préférer se sentir seul concerné, par exemple les résultats d'un jeu ou une sélection particulière pour un pronostic. Cette visualisation distincte et directionnelle permet la vision sélective et privilégiée d'informations affichées dans une zone prédéterminée de la surface de visualisation ou d'informations affichées sur une surface de visualisation ou d'affichage auxiliaire, par exemple un afficheur digital.

Un second but de l'invention est de réaliser une meilleure utilisation des zones d'affichage d'une surface de visualisation. L'écran d'un moniteur vidéo, par exemple, est généralement légèrement bombé, même lorsque l'écran est qualifié de plat, les informations visualisées peuvent présenter une certaine déformation lorsqu'elles apparaissent dans une zone marginale de l'écran. Il en résulte que les zones marginales de l'écran sont peu utilisables et cela réduit sensiblement la surface effective de visualisation utile pour des dimensions d'écran données. En outre, et ceci est peut-être plus important dans certaines applications, lorsque la surface de visualisation est protégée par une vitre et si l'on veut décorer la totalité de la surface de la vitre, notamment devant un écran vidéo, en délimitant l'écran ou en étendant le décor, comme il serait intéressant de la faire dans des appareils de traitement de textes, de lecture de listages, de jeux d'amusement ou d'animation, par exemple, il se produit un phénomène de parallaxe qui peut gêner la vision ou la lecture des information affichées, ce phénomène de parallaxe étant d'ailleurs d'autant plus important que la zone d'affichage se trouve plus proche du bord de l'écran par suite de la courbure de celui-ci.

Ce but est atteint selon un deuxième aspect de l'invention, grâce à un dispositif de visualisation caractérisé par un dispositif optique disposé en face d'une zone au moins de la surface de visualisation. Le dispositif optique peut avantageusement avoir une face formée avec des éléments en saillie concentriques dont le centre de courbure est situé du côté du centre de la surface de visualisation.

Cette disposition selon l'invention a pour avantage d'agrandir virtuellement la surface de visualisation et de rendre davantage lisibles les informations affichées, notamment dans les zones marginales, notamment les zones marginales verticales et horizontales basses de la surface de visualisation. De plus, cette disposition crée une différenciation d'effet entre la fenêtre de visualisation centrale et les zones marginales pourvues d'un dispositif optique, laquelle différenciation d'effet a pour résultat de donner une profondeur inattendue à la fenêtre de visualisation centrale.

De plus, la visualisation sélective et privilégiée que réalise l'invention ouvre des perspectives nouvelles quant aux utilisations d'appareils électroniques publics, notamment lorsque la surface de visualisation se trouve divisée en cases, et elle élargit le champ d'application des appareils de ce genre à la consultation de fichiers, catalogues, banques de données, et annonces diverses (par exemple annonces d'emplois ou annonces matrimoniales), à l'achat par correspondance, à la communication de messages, voire l'échange de messages entre appareils à la disposition du public, ainsi qu'il apparaîtra plus loin, si l'on met le dispositif de visualisation en liaison avec un ordinateur central grâce à un terminal que comprendrait chaque appareil public.

D'autres particularités et aspects de l'invention ressortiront de la description qui suit. Cet exposé s'appuie sur les dessins ci-annexés dans lesquels :
- la figure 1 est une vue de face d'un dispositif de visualisation exemplaire selon l'invention,
- la figure 2 est une vue en coupe partielle suivant la ligne II-II de la figure 1,
- la figure 3 est une vue en coupe suivant la ligne III-III de la figure 1,
- la figure 4 est une vue de face avec arrachement d'une partie du dispositif montré dans la figure 1.

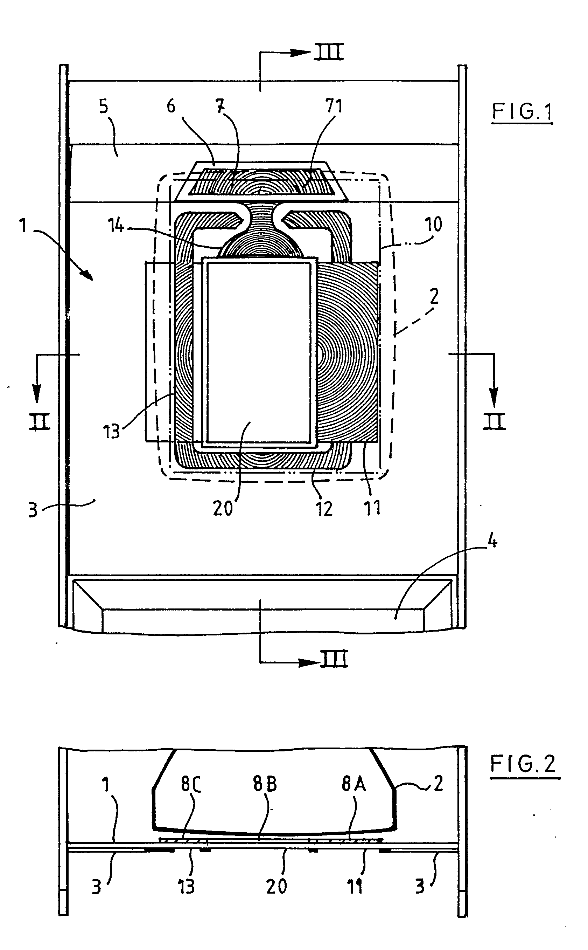

Se reportant aux figures 1 et 2, on voit représenté un mode de réalisation exemplaire d'un dispositif de visualisation selon l'invention, incorporé dans un appareil de jeu électronique choisi à titre d'exemple non limitatif. Derrière une vitre de protection 1 visible sur la face frontale de l'appareil est logé un écran ou moniteur video 2 relié électriquement à des circuits de commande usuels non représentés et qui ne font point partie de l'invention. La surface de la vitre 1 est ici rendue opaque dans la partie 3 au moyen d'une couche de peinture ou d'une matière adhésive tandis qu'elle est laissée transparente dans les zones 11, 12, 13, 14 et dans la zone centrale 20 qui constitue une fenêtre de visualisation ainsi que dans la zone 7 comme on le verra plus loin. Dans ces zones transparentes est visible l'écran de visualisation du moniteur video. La ligne identifiée par 10 délimite la surface de visualisation du dispositif.

La notation de référence 4 désigne l'emplacement d'un clavier pour l'introduction des données et la sélection des fonctions programmées nécessaires à l'emploi de l'appareil. Celui-ci contient évidemment les circuits électroniques pour commander le déroulement du jeu et l'affichage afin de visualiser par exemple une grille de jeu comptant un nombre prédéterminé de cases dans la zone de visualisation centrale 20. La zone latérale 11 dans l'exemple illustré, est réservée à l'affichage des menus d'emploi.

Dans les figures 1 et 2 est visible un premier aspect de l'invention. Dans le haut de la vitre de protection 1 se détache un bandeau 5 saillant qui s'étend dans un plan oblique par rapport au plan de la vitre 1 ou d'une façon plus générale par rapport au plan tangent au sommet de la face de l'écran 2. Ce bandeau 5 peut être réalisé en un matériau quelconque et présente une lucarne 6 lui jouxte la ligne d'intersection entre le bandeau 5 et la vitre 1. Dans la lucarne 6 est montée une plaque en matière transparente sur une face de laquelle (par exemple la face arrière comme on le voit dans la figure 1) est fixé un moyen optique 7 qui assure un grossissement prédéterminé ou une déforma tion de l'image. Les informations visibles dans la lucarne 6 sont ainsi vues dans une direction privilégiée avec un agrandissement qui en facilite la lecture et si ces informations sont mises en évidence pour l'utilisateur convenablement placé devant l'appareil, elles sont cependant déformées ou difficilement lisibles par un observateur qui se tiendrait à côté de l'utilisateur ou derrière lui par exemple, vu que l'utilisateur se trouve devant le dispositif de visualisation.

Le dispositif optique 7 peut être constitué d'un moyen quelconque propre à créer un grossissement ou une déformation d'une image, comme par exemple une lentille, un prisme, un miroir ou jeu de miroirs, une vitre déformante trompe-l'oeil ou tout autre moyen équivalent. Dans un mode d'exécution exemplaire préféré, le dispositif optique 7 est une feuille en matière transparente moulée de faible épaisseur ayant une face formée avec des éléments en saillie qui s'étendent suivant des courbes concentriques 71 dont le centre de courbure est situé vers le centre de la surface de visualisation (10). Ce dispositif optique agrandit virtuellement la surface de visualisation effective, de la façon voulue, c'est-à-dire en l'occurrence vers le haut de la figure 1.

Dans la lucarne directionnelle 6 pourrait aussi être monté le dispositif optique 7 lui-même, d'épaisseur suffisante, ce dispositif pouvant être lisse ou formé avec des saillies courbes concentriques. Il va de soi que plusieurs lucarnes directionnelles peuvent être prévues autour d'une même surface de visualisation. La ou chaque lucarne peut également être ménagée dans un boîtier adaptable sur le dispositif de visualisation.

Grâce à la lucarne optique directionnelle, il est donc possible d'afficher des informations qui ne doivent être visibles que par l'usager se trouvant en face d'un appareil. Cette zone de visualisation distincte privilégiée permet d'afficher des informations plus particulières que celles qui sont affichées dans la zone de visualisation banale 20 du moniteur video, et d'afficher par exemple des informations auxquelles on souhaite conférer un certain caractère de confidentialité, voire des informations de nature plus personnelle même. Sur un appareil de jeu électronique, par exemple, il est ainsi possible d'afficher dans la lucarne optique directionnelle, une série de nombres constituant le résultat d'un jeu ou une sélection particulière pour un pronostic.

De plus, le dispositif optique garnissant la lucarne directionnelle permet, par la diffraction de la lumière, de créer un effet d'irisation qui colore l'affichage, même avec un moniteur video ou afficheur en noir et blanc auquel peut alors être associée une source de lumière blanche dirigeant un faisceau de lumière vers la lentille ajoutant ainsi des couleurs au moniteur ou afficheur noir et blanc. En outre, la lentille crée également un effet de profondeur inattendu qui contribue avantageusement à mettre les informations affichées en évidence par rapport au fond et contribue à estomper ce fond.

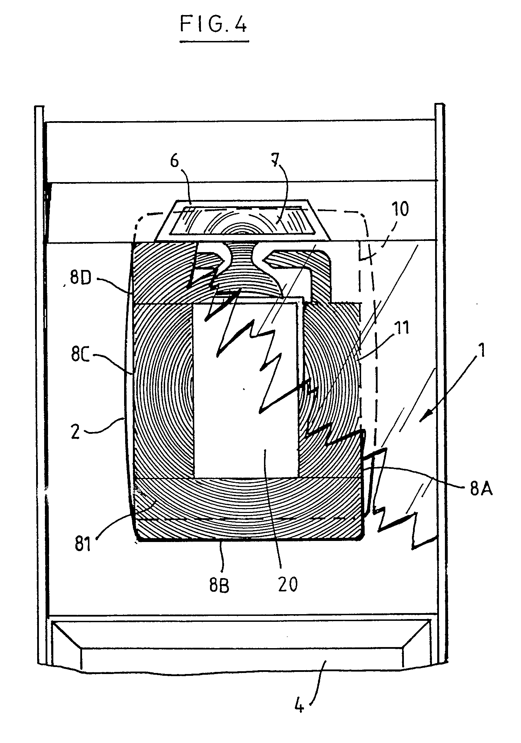

Suivant un deuxième aspect de l'invention, un dispositif optique est disposé en face d'une zone marginale au moins de la surface de visualisation 10. Dans le mode de réalisation illustré, un dispositif optique se trouve disposé dans les zones marginales 11,12, 13 et 14 de la figure 1. Ces dispositifs optiques sont dési gnés plus particulièrement en 8A, 8B, 8C et 8D dans la figure 4. Les dispositifs optiques 8A-8D sont avantageusement constitués de feuilles en matière transparente moulée de faible épaisseur, collées sur une face de la vitre de protection 1, ces feuilles présentant des éléments en saillie concentriques 81 sur une face, avec leur centre de courbure situé vers le centre de la surface de visualisation de manière à élargir virtuellement la surface de visualisation. La courbure des éléments concentriques pourrait être dirigée autrement pour simplement agrandir une ou plusieurs zones internes. Il va de soi que les dispositifs optiques tels que 8A-8D peuvent être formés dans une même feuille dans laquelle serait découpée la fenêtre de visualisation centrale 20.

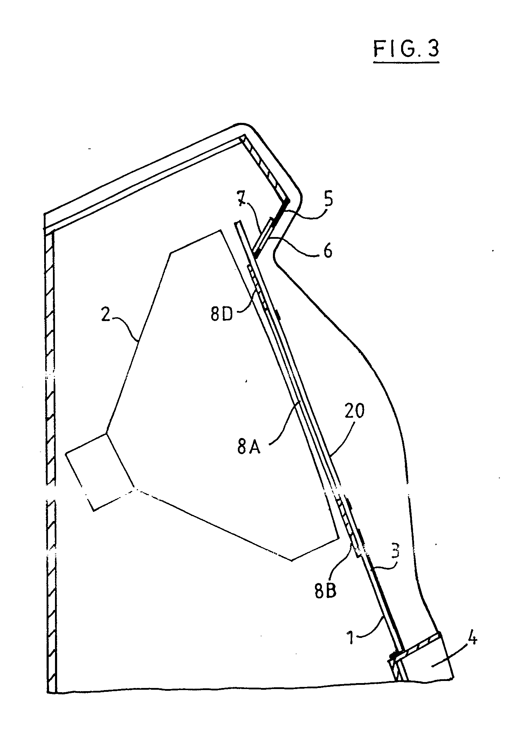

Comme le montrent les figures 2 et 3, les feuilles optiques 8A-8D sont collées sur une face de la vitre 1. Les dispositifs optiques peuvent évidemment être constitués de lentilles, prismes ou tout autre moyen ayant une fonction analogue, ces dispositifs optiques pouvant aussi être collés sur l'écran du moniteur 2, par exemple. Les dispositifs optiques 8A-8D pourraient également être formés dans une feuille en matière transparente moulée, imprimée sur une face pour délimiter les zones de visualisation telles que 11-14 et 20.

La disposition selon l'invention a pour effet, grâce au grossissement optique, non seulement d'agrandir virtuellement l'écran de visualisation et de rendre davantage lisibles les informations affichées dans les zones marginales 11-14 de la surface de visualisation, mais également de façon avantageuse et intéressante, d'éliminer pratiquement ou au moins réduire considéra blement le phénomène de parallaxe, lequel phénomène est d'autant plus important que la distance séparant la vitre de protection de l'écran dans ces zones marginales est grande par suite de la courbure de l'écran. Cet effet a également pour résultat d'estomper le bord de l'écran de visualisation.

Dans l'appareil de jeu montré dans la figure 1, la zone 11 peut ainsi être réservée avec avantage à l'affichage des menus de jeu, par exemple, qui se détachent bien sur le fond. Lorsque, en outre, la fenêtre de visualisation central 20 est laissée normalement transparente, il se crée avantageusement une différenciation d'effet originale ayant pour résultat de donner une profondeur inattendue à la fenêtre centrale qui paraît alors entourée d'écrans auxiliaires.

L'invention a pour avantage supplémentaire d'ouvrir des perspectives nouvelles quant aux utilisations d'appareils automatiques et élargit avantageusement leur champ d'application dans des endroits publics. Un appareil public muni du dispositif de visualisation selon l'invention peut avantageusement être équipé d'un terminal d'ordinateur qui mettrait le dispositif de visualisation en liaison avec un ordinateur central afin de permettre à la clientèle la consultation de banques de données, de catalogues, de fichiers matrimoniaux, ou encore la communication de messages divers ou l'achat par correspondance.

Pour un appareil organisé pour l'enregistrement de paris sportifs, par exemple, il serait possible, grâce à la liaison avec le siège de gestion des paris, d'enregistrer directement les paris d'un manière originale. Et en le complétant d'une imprimante, l'appareil pourrait même délivrer des billets compostés portant des inscriptions imprimées choisies quelconques.

Grâce à la liaison à un ordinateur central, un appareil de jeux d'amusement public équipé d'un dispositif de visualisation selon l'invention peut ainsi devenir un point d'accès de saisie de données permettant à un client quelconque d'avoir accès à des jeux multiples transmis par l'ordinateur central. Un tel appareil public pourrait en outre, de manière originale, permettre à un client d'avoir accès à des messages, concours ou sondages divers et même de dialoguer de façon confidentielle avec des centres divers et en obtenir des informations utiles, qui seraient rendues visibles dans une lucarne de visualisation directionnelle selon l'invention. En un mot, un appareil public qui jusqu'à présent était habituellement destiné à l'amusement, pourra dorénavant, grâce à l'invention, avoir également un but utilitaire et s'ouvrir sur le monde des réseaux d'informations au service de la clientèle.

Il est bien entendu que le dispositif de visualisation perfectionné selon l'invention peut être exécuté dans des modes d'exécution différents de celui qui est illustré à titre d'exemple dans les dessins ci-annexés afin d'être incorporé dans des appareils divers.

En particulier, le dispositif optique qui constitue l'élément original essentiel conférant au dispositif de visualisation auquel il est combiné ses particularités originales, pourrait également être réalisé sous la forme d'un dispositif optique séparé adaptable sur un dispositif de visualisation ou d'affichage quelconque.

## Revendications

1. Dispositif de visualisation comportant une surface de visualisation (10) pour présenter des informations, caractérisé par une lucarne de visualisation directionnelle (6) comportant un dispositif grossissant ou déformant (7) s'étendant le long d'un côté au moins de la surface de visualisation (1) dans un plan général oblique par rapport à celui de ladite surface de visualisation de manière à rendre des informations sélectionnées visibles dans une direction privilégiée.

2. Dispositif selon la revendication 1, caractérisé en ce que le dispositif grossissant ou déformant (7) est disposé de manière à rendre visibles les informations présentées dans une zone prédéterminée de la surface de visualisation (10).

3. Dispositif selon la revendication 1, caractérisé en ce que le dispositif grossissant ou déformant (7) est disposé de manière à rendre visible les informations affichées sur un dispositif de visualisation ou d'affichage annexe.

4. Dispositif selon l'une quelconque des revendications précédentes, caractérisé en ce que le dispositif grossissant ou déformant (7) est formé avec des éléments en saillie concentriques (71) dont le centre de courbure est situé vers le centre de la surface de visualisation.

5. Dispositif selon l'une quelconque des revendications 1 à 4, caractérisé en ce que le dispositif grossissant ou déformant (7) est constitué d'une feuille de matière transparente moulée fixée sur un support transparent.

6. Dispositif selon l'une quelconque des revendications précédentes, caractérisé en ce que le dispositif grossissant ou déformant (7) est monté dans un boîtier adapté sur le dispositif.

7. Dispositif selon l'une quelconque des revendications 1 à 6, caractérisé en ce qu'il comprend au moins un dispositif optique (8A, 8B, 8C, 8D) disposé en face d'une zone marginale au moins de la surface de visualisation (10).

8. Dispositif selon la revendication 7, caractérisé en ce qu'au moins un dispositif optique (8A-8D) est formé avec des éléments en saillie concentriques (81) sur une face.

9. Dispositif selon la revendication 8, caractérisé en ce que le centre de courbure des éléments concentriques (81) est situé vers le centre de la surface de visualisation (10).

10. Dispositif selon la revendication 7, 8 ou 9, caractérisé en ce que le dispositif optique (8) est constitué d'une feuille en matière transparente moulée imprimée sur une face pour délimiter les zones de visualisation.

11. Dispositif selon la revendication 7, 8 ou 9, caractérisé en ce que le ou chaque dispositif optique (par exemple 8A, 8B, 8C, 8D) est fixé sur un écran video.

12. Dispositif selon la revendication 7, 8 ou 9, caractérisé en ce que le ou chaque dispositif optique (8A, 8B, 8C, 8D) est fixé sur une face d'une plaque de protection (1) en matière transparente s'étendant en face de la surface de visualisation (10).

13. Dispositif selon la revendication 11, caractérisé en ce que chaque dispositif optique (8A, 8B, 8C, 8D) est constitué d'une feuille en matière transparente moulée de faible épaisseur.

14. Dispositif selon la revendication 13, caractérisé en ce que les dispositif optiques (8A, 8B, 8C, 8D) sont formées dans une même feuille de matière transparente dans laquelle est découpée la fenêtre de visualisation principale (20).

15. Dispositif de visualisation comportant une surface de visualisation (10), caractérisé en ce qu'il comprend au moins un dispositif optique (8A, 8B, 8C, 8D) disposé en face d'une zone marginale au moins de la surface de visualisation (10).

16. Dispositif selon la revendication 15, caractérisé en ce qu'au moins un dispositif optique (8A-8D) est formé avec des éléments en saillie concentriques (81) sur une face.

17. Dispositif selon la revendication 16, caractérisé en ce que le centre de courbure des éléments en saillie concentriques (81) est situé vers le centre de la surface de visualisation (10).

18. Dispositif selon la revendication 15, 16 ou 17, caractérisé en ce que le dispositif optique (8) est constitué d'une feuille en matière transparente moulée imprimée sur une face pour délimiter les zones de visualisation.

19. Dispositif selon la revendication 15, 16 ou 17, caractérisé en ce que le ou chaque dispositif optique (par exemple 8A, 8B, 8C, 8D) est fixé sur un écran video.

20. Dispositif selon la revendications 15, 16 ou 17, caractérisé en ce que le ou chaque dispositif optique (8A, 8B, 8C, 8D) est fixé sur une face d'une plaque de protection (1) en matière transparente s'étendant en face de la surface de visualisation (10).

21. Dispositif selon la revendication 20, caractérisé en ce que chaque dispositif optique (8A, 8B, 8C, 8D) est constitué d'une feuille en matière transparente moulée de faible épaisseur.

22. Dispositif selon la revendication 21, caractérisé en ce que les dispositifs optiques (8A, 8B, 8C, 8D) sont formés dans une même feuille de matière transparente dans laquelle est découpée la fenêtre de visualisation principale (20).

23. Dispositif optique destiné à être adapté sur la surface de visualisation ou d'affichage d'un appareil quelconque, comprenant un moyen grossissant ou déformant (8) prévu pour s'étendre sur ou en face d'une zone au moins de ladite surface de visualisation ou d'affichage (10).

24. Dispositif optique destiné à être sur la surface de visualisation ou d'affichage d'un appareil quelconque, comprenant un moyen grossissant ou déformant (7) et un moyen de fixation prévu pour adapter le dispositif de manière que ledit moyen grossissant ou déformant (7) s'étende dans un plan oblique par rapport au plan de la surface de visualisation ou d'affichage (10).

25. Dispositif optique selon la revendication 23 ou 24, caractérisé en ce que ledit moyen grossissant ou déformant (par exemple 7, 8) a une face formée avec des éléments en saillie concentriques (par exemple 71, 81).

26. Appareil électronique destiné à l'usage public, caractérisé en ce qu'il comprend un dispositif de visualisation selon l'une quelconque des revendications 1 à 22, de manière à présenter à l'usager une zone de visualisation principale (20) et au moins une zone de visualisation directionnelle (7).

27. Appareil selon la revendication 26, dans lequel le dispositif de visualisation sélectif est connecté à un terminal d'ordinateur de manière à permettre un affichage privilégié dans une zone de visualisation directionnelle (7) au moins.

28. Appareil selon la revendication 27, dans lequel le terminal d'ordinateur est relié à une imprimante.

FIG.1

FIG.2

FIG. 3

FIG.4